# FASCICULE DE BREVET EUROPEEN

(11) **EP 2 166 632 B1**
(45) Date de publication et mention de la délivrance du brevet: **06.07.2011**
(21) Numéro de dépôt: 08360031.2
(22) Date de dépôt: 22.09.2008
(51) Int. Cl.: H02G 3/08

(54) **Boitier de montage d'appareillages multiples**
Montagegehäuse für mehrere Geräte
Mounting box for multiple apparatus

(43) Date de publication de la demande: 24.03.2010
(73) Titulaire: AB Plast S.r.l., 25018 MONTICHIARI BS (IT)
(72) Inventeur: Paderno Alberto, 25010 Montirone (IT)
(74) Mandataire: Nuss, Pierre

(56) Documents cités:
- DE-U1- 20 207 027
- US-B1- 6 395 981

## Description

La présente invention concerne le domaine des appareillages électriques, en particulier des boîtes d'encastrement ou en saillie pour le montage d'appareillages électriques, tels que des interrupteurs, des prises de courant ou autres, et a pour objet un boîtier de montage d'appareillages multiples.

Les boîtiers de montage d'appareillages multiples se présentent généralement comme une alternative à des goulottes de distribution en permettant la mise en oeuvre de plusieurs appareillages électriques identiques ou différents, en saillie sur un mur ou en encastrement.

Généralement, ces boîtiers qui présentent une forme de parallélépipède rectangle sont pourvus sur la face interne de leurs bords de dispositifs en saillie destinés à former des fûts de vissage de vis de serrage des appareillages dans lesdits boîtiers. En outre, ces boîtiers sont munis, par paire, sur la face interne de leurs bords longitudinaux opposés, de moyens de maintien et de guidage de séparations amovibles. Ces séparations amovibles sont destinées à réaliser une séparation physique entre les éléments constitutifs de deux appareillages électriques successifs avec une éventuelle possibilité de liaison électrique entre cesdits appareillages par prévision, sur lesdites séparations de languettes arrachables permettant le passage de câbles ou analogues.

Ces boîtiers connus permettent le plus souvent de répondre efficacement aux besoins. Cependant, dans le cas d'utilisation d'appareillages de types ou de provenances différents (différents fabricants), il existe un risque qu'un appareillage donné ne soit pourvu de moyens de fixation par vissage que sur deux côtés, de sorte qu'il ne pourrait éventuellement être solidarisé avec le boîtier que par une seule vis de serrage ou qu'il devrait être monté dans ledit boîtier après avoir subi une rotation de 90°. En effet, si un appareillage n'est pourvu de moyens de serrage par vissage, tel qu'un trou de passage de vis, que sur deux côtés opposés, le serrage par vissage de cet appareillage doit impérativement être effectué sur les deux côtés. Or, si les côtés pourvus des moyens de serrage sont alignés suivant le sens longitudinal du boîtier du montage des appareillages, ces derniers ne seront serrés que sur un seul de leur côté, voire ne pourront pas être serrés dans le cas d'un boîtier destiné à recevoir trois appareillage.

Pour obvier à cet inconvénient, il est alors nécessaire de faire effectuer aux appareillages une rotation à 90°, ce qui peut être dérangeant pour une utilisation ultérieure. Cet inconvénient existe également dans le cas précis où un appareillage doit subir une rotation de 90°, par exemple dans le cas d'une prise de courant, lorsque la fiche correspondante risque de gêner la mise en oeuvre de l'appareillage voisin.

La présente invention a pour but de pallier ces inconvénients en proposant un boîtier de montage d'appareillages multiples permettant un montage rapide et simple de tous types d'appareillages, ce quels que soient les moyens de montage dont ils sont pourvus.

A cet effet, le boîtier de montage d'appareillages multiples, qui est constitué par un carter en forme de parallélépipède rectangle de réception d'appareillages électriques de différents types et par au moins une cloison de séparation transversale, est caractérisé en ce que ladite cloison de séparation transversale se présente sous forme d'une plaque verticale guidée, de manière réversible par rapport à ses axes médians, dans des guides parallèles prévus à l'intérieur des parois longitudinales opposées du carter de boîtier, et est asymétrique par rapport à son axe médian longitudinal.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue éclatée en perspective d'un boîtier conforme à l'invention ;
la figure 2 est une vue en perspective du boîtier, la cloison de séparation transversale étant en position de service ;
la figure 3 est une vue analogue à celle de la figure 2, des appareillages électriques étant montés dans le boîtier, avec serrage dans ce dernier uniquement dans le sens longitudinal, l'un desdits appareillages étant représenté avec une partie arrachée, et
la figure 4 est une vue analogue à celle de la figure 3, l'un des appareillages étant fixé dans le sens transversal du boîtier et l'autre dans le sens longitudinal.

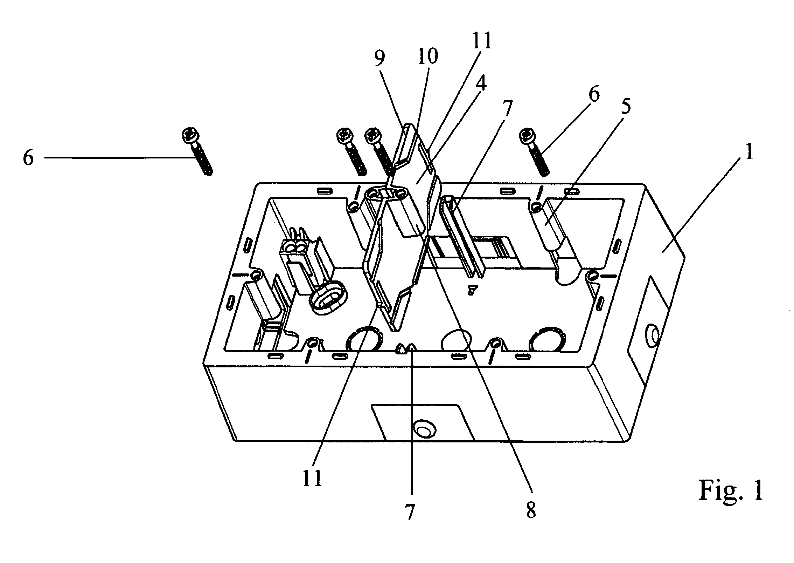

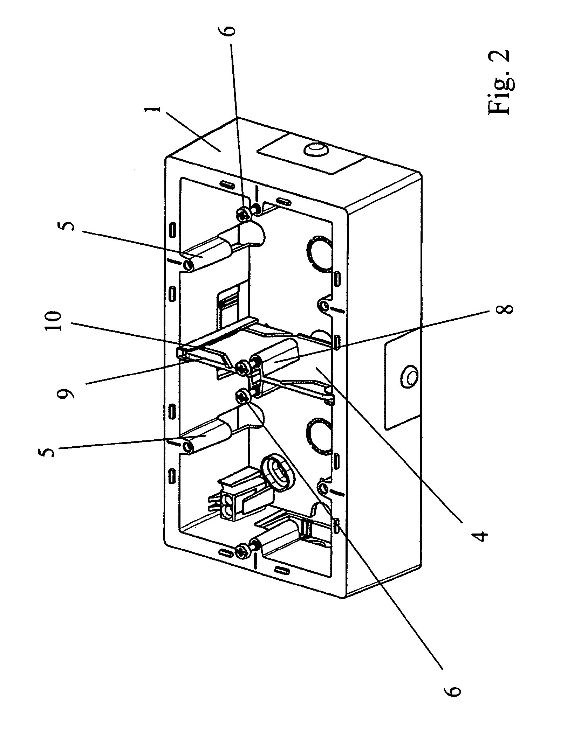

Les figures 1 à 4 des dessins annexés représentent, à titre d'exemple, un boîtier 1 de montage d'appareillages multiples 2 et 3, qui est constitué par un carter en forme de parallélépipède rectangle de réception d'appareillages électriques 2 et 3 de différents types et par au moins une cloison de séparation transversale 4. De manière connue, le boîtier 1 est pourvu sur la face intérieure de ses parois verticales de moyens 5 de réception de vis 6 de serrage des appareillages 2 et 3, par leur plaque de support 2', 3' sur lesdites parois verticales du boîtier 1.

Conformément à l'invention, la cloison de séparation transversale 4 se présente sous forme d'une plaque verticale guidée, de manière réversible par rapport à ses axes médians, dans des guides parallèles 7 prévus à l'intérieur des parois longitudinales opposées du carter de boîtier 1, et est asymétrique par rapport à son axe médian longitudinal. A cet effet, la cloison de séparation transversale 4 est munie, de part et d'autre de l'un de ses bords longitudinaux, dans l'axe médian transversal, d'un fût 8 destiné à coopérer avec une vis 6 de serrage d'un appareillage 2 ou 3, cedit fût 8 s'étendant sur une partie de la dimension transversale de la cloison 4.

Par ailleurs, la cloison de séparation transversale 4 est avantageusement pourvue, près de ses coins, de languettes arrachables 9 reliées à ladite cloison 4 suivant des lignes d'affaiblissement 10. En outre, la cloison de séparation transversale 4 est pourvue sur ses bords transversaux d'au moins une saillie 11, disposée sensiblement dans leur partie médiane et destinée à coopérer par encliquetage avec une rainure d'engagement correspondante prévue dans les guides parallèles 7.

Ainsi, quelle que soit la position de montage de la cloison de séparation transversale 4 dans le carter de boîtier 1, cette cloison 4 est maintenu rigidement dans ledit boîtier 1 et il est possible de réaliser un passage de conducteurs électriques ou autres entre les volumes délimités à l'intérieur du boîtier 1 par la cloison 4, par exemple pour une liaison électrique entre les appareillages 2 et 3. Dans le cas d'une telle liaison électrique, il suffit, en effet, d'arracher l'une des languettes 9 ou les deux languettes 9 situées sur le bord s'appuyant au fond du boîtier 1 pour permettre le passage des conducteurs.

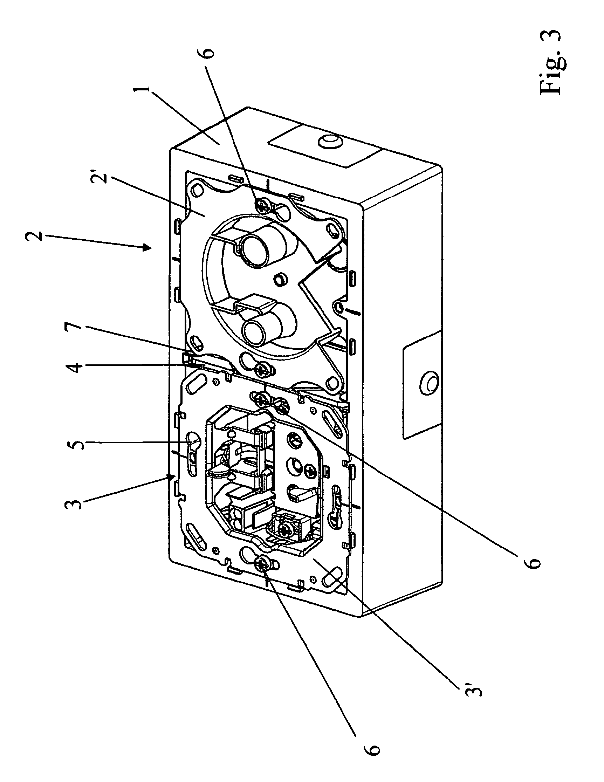

Les fûts 8 disposés de part et d'autre de l'un des bords longitudinaux de la cloison 4 permettent, comme le montre plus particulièrement la figure 3 des dessins annexés, un montage d'appareillages 2 et 3 suivant l'axe longitudinal du boîtier 1, avec serrage de ces appareillages 2 et 3 au moyens de vis de serrage 6, dont deux coopèrent avec les moyens 5, en forme de fûts, prévus sur les parois internes transversales du boîtier 1 et les deux autres avec les fûts 8 prévus sur l'un des bords longitudinaux de la cloison de séparation transversale 4, qui, en l'occurrence, est monté dans les guides 7 de manière à présenter lesdits fûts 8 tournés vers le haut.

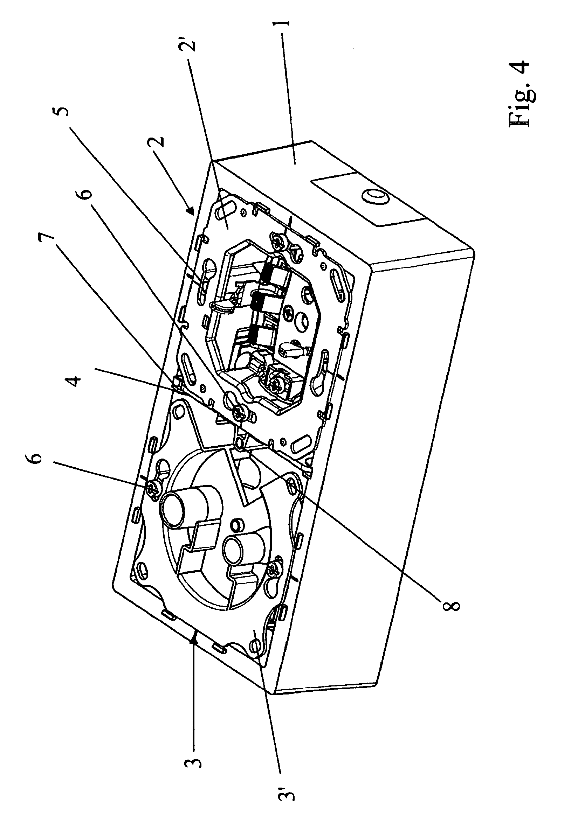

La figure 4 représente un montage d'appareillages 2 et 3, dont l'un, 2, est monté avec serrage suivant l'axe longitudinal du boîtier 1, alors que l'autre 3 est monté avec serrage suivant l'axe transversal du boîtier 1. Ainsi, l'appareillage 3 est serré dans le boîtier 1 par les vis 6 sans mise en oeuvre du fût 8 correspondant prévu sur la cloison de séparation transversale 4, alors que l'appareillage 2 met en oeuvre, pour son serrage, le fût 8 correspondant. Bien entendu, dans le cas d'un montage et d'un serrage des appareillages 2 et/ou 3 avec mise en oeuvre de vis de serrage 6 coopérant uniquement avec les moyens 5 de réception des vis de serrage 6, en forme de fûts, prévus sur la face interne des parois longitudinales du boîtier 1, il est possible d'utiliser la cloison de séparation transversale 4 dans une orientation inverse de celle représentée aux figures annexées, c'est-à-dire, avec son bord longitudinal muni des fûts 8 tournés vers le fond du boîtier 1, la cloison 4 servant alors uniquement de séparation.

Dans le cas d'une utilisation hybride, c'est-à-dire correspondant au mode de réalisation selon la figure 4, dans lequel l'appareillage 3 s'appuie sur le fût 8 de la cloison 4 sans être serré sur ladite cloison par vissage, ainsi que dans le cas d'une utilisation dans laquelle les appareillages 2 et 3 sont vissés par un bord sur la cloison de séparation transversale 4, lesdits appareillages 2 et 3 sont toujours maintenus de manière rigide dans le boîtier 1, sans possibilité d'un quelconque déplacement hors de ce boîtier. En effet, du fait qu'au moins un serrage des appareillages 2 et 3 est toujours effectué en coopération avec un moyen 5 des parois du boîtier 1, le serrage de ces appareillages dans le boîtier 1 est suffisant pour assurer le maintien desdits appareillages 2 et 3. En outre, la prévision de saillie 11 sur les bords transversaux de la cloison de séparation transversale 4, qui coopère par encliquetage avec des rainures correspondantes des guides parallèles 7, assurent un maintien complémentaire de ladite cloison 4.

Grâce à l'invention, il est possible de réaliser un boîtier de montage d'appareillages multiples, dans lequel lesdits appareillages peuvent être montés suivant des orientations diverses, en fonction de leur utilisation ou de la disposition du boîtier tout en étant maintenu de manière parfaite.

En effet, grâce à la cloison de séparation transversale 4, le montage et le maintien d'appareillage, par exemple de l'appareillage 3, ne présentant que deux perçages ou oeillets de passage de vis de fixation, peuvent être réalisés dans une position donnée ou dans une autre position tournée à 90° par rapport à la première sans nécessiter d'outillage ni la mise en oeuvre de moyens spéciaux, de manière simple et rapide.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Boîtier (1) de montage d'appareillages multiples (2 et 3), constitué par un carter en forme de parallélépipède rectangle de réception d'appareillages électriques (2 et 3) de différents types et par au moins une cloison de séparation transversale (4), ledit boîtier (1) étant pourvu sur la face intérieure de ses parois verticales de moyens (5) de réception de vis (6) de serrage des appareillages (2 et 3), par leur plaque de support (2' et 3'), sur lesdites parois verticales du boîtier (1), **caractérisé en ce que** ladite cloison de séparation transversale (4) se présente sous forme d'une plaque verticale guidée, de manière réversible par rapport à ses axes médians, dans des guides parallèles (7) prévus à l'intérieur des parois longitudinales opposées du carter de boîtier (1), et est asymétrique par rapport à son axe médian longitudinal.

2. Boîtier, suivant la revendication 1, **caractérisé en ce que** la cloison de séparation transversale (4) est munie, de part et d'autre de l'un de ses bords longitudinaux, dans l'axe médian transversal, d'un fût (8) destiné à coopérer avec une vis (6) de serrage d'un appareillage (2 ou 3), ledit fût (8) s'étendant sur une partie de la dimension transversale de la cloison (4).

3. Boîtier, suivant l'une quelconque des revendications 1 et 2, **caractérisé en ce que** la cloison de séparation transversale (4) est pourvue, près de ses coins, de languettes arrachables (9) reliées à ladite cloison (4) suivant des lignes d'affaiblissement (10).

4. Boîtier, suivant l'une quelconque des revendications 1 à 3, **caractérisé en ce que** la cloison de séparation transversale (4) est pourvue sur ses bords transversaux d'au moins une saillie (11), disposée sensiblement dans leur partie médiane et destinée à coopérer par encliquetage avec une rainure d'engagement correspondante prévue dans les guides parallèles (7).

## Claims

1. Mounting box (1) for multiple apparatus (2 and 3), formed by a case in the form of a parallelepiped rectangle for receiving electrical apparatuses (2and 3) of different types and by at least one transverse separating partition (4), said box (1) being provided on the interior face of its vertical walls with means (5) for receiving screws (6) for clamping the apparatus (2 and 3), by means of their support plate (2' and 3'), on said vertical walls of the box (1), **characterised in that** said transverse separating partition (4) is in the form of a vertical plate which is guided in a reversible manner in relation to its median axes, in parallel guides (7) provided on the inside of opposite longitudinal walls of the box case (1) and is asymmetrical in relation to its longitudinal median axis.

2. Box according to claim 1, **characterised in that** the transverse separating partition (4) is provided on either side of one of its longitudinal edges, in the transverse median axis, with a barrel (8) designed to cooperate with a screw (6) for clamping an apparatus (2 or 3), said barrel (8) extending over part of the transverse dimension of the partition (4).

3. Box according to any one of claims 1 and 2, **characterised in that** the transverse separation partition (4) is provided, close to its corners, with tear-off tabs (9) connected to said partition (4) according to weakening lines (10).

4. Box according to any one of claims 1 to 3, **characterised in that** the transverse separation partition (4) is provided on its transverse edges with at least one projection (11) which is arranged substantially in their median section and designed to cooperate by clicking into a corresponding engagement groove provided in the parallel guides (7).

## Patentansprüche

1. Einbaugehäuse (1) vielfältiger Einbauten (2 und 3), bestehend aus einem Gehäuse in Form eines rechtwinkligen Parallelepipeds zur Aufnahme von elektrischen Einbauten (2 und 3) verschiedener Typen und aus wenigstens einer Quertrennwand (4), wobei das Gehäuse (1) auf der Innenseite seiner senkrechten Wände mit Mitteln (5) zum Aufnehmen einer Klemmschraube (6) der Einrichtungen (2 und 3) durch ihre Trägerplatte (2' und 3') auf den vertikalen Wänden des Gehäuses (1) versehen ist, **dadurch gekennzeichnet, dass** die Quertrennwand (4) als vertikal geführte Platte, in zweiseitiger Weise bezüglich ihrer Mittelachsen ausgebildet ist, in parallelen Führungen (7), die auf der Innenseite gegenüber liegender Längswände des Einbaugehäuses (1) vorgesehen sind, ausgebildet ist und dass sie asymmetrisch bezüglich ihrer Längsmittelachse ist.

2. Gehäuse nach Anspruch 1, **dadurch gekennzeichnet, dass** die Quertrennwand (4) beidseitig an einer ihrer Längskanten in der Quermittelachse mit einem Schaft (8) versehen ist, der ausgelegt ist, um mit einer Klemmschraube (6) eines Einbaus (2 oder 3) zusammenzuwirken, wobei der Schaft (8) sich über einen Abschnitt der Quererstreckung der Trennwand (4) erstreckt.

3. Gehäuse nach einem der Ansprüche 1 und 2, **dadurch gekennzeichnet, dass** die Quertrennwand (4) in der Nähe ihrer Kanten mit abreißbaren Laschen (9) versehen ist, die mit der Trennwand (4) entlang Schwächungslinien (10) verbunden sind.

4. Gehäuse nach einem der Ansprüche 1 bis 3, **dadurch gekennzeichnet, dass** die Quertrennwand (4) an ihren Querrändern mit wenigstens einem Vorsprung (11) versehen ist, der im Wesentlichen an deren mittlerem Abschnitt angeordnet ist und ausgelegt ist, mittels einer Verrastung mit einer entsprechenden Eingriffsnut, die in den parallelen Führungen (7) vorgesehen ist, zusammenzuwirken.
